(19) Europäisches Patentamt
European Patent Office
Office européen des brevets

(11) **EP 2 734 807 B1**

(12) **EUROPÄISCHE PATENTSCHRIFT**

(45) Veröffentlichungstag und Bekanntmachung des Hinweises auf die Patenterteilung:
**06.05.2015 Patentblatt 2015/19**

(21) Anmeldenummer: **11745730.9**

(22) Anmeldetag: **19.07.2011**

(51) Int Cl.:
**G01B 5/008** *(2006.01)* **G01B 5/00** *(2006.01)*
**G01C 5/04** *(2006.01)*

(86) Internationale Anmeldenummer:
**PCT/EP2011/062359**

(87) Internationale Veröffentlichungsnummer:
**WO 2013/010584 (24.01.2013 Gazette 2013/04)**

(54) **KOORDINATENMESSGERÄT MIT EINER VORRICHTUNG AUS KOMMUNIZIERENDEN RÖHREN**

COORDINATE MEASURING APPARATUS HAVING A DEVICE CONSISTING OF COMMUNICATING TUBES

APPAREIL DE MESURE DE COORDONNÉES ÉQUIPÉ D'UN DISPOSITIF À TUBES COMMUNICANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.05.2014 Patentblatt 2014/22**

(73) Patentinhaber: **Carl Zeiss Industrielle Messtechnik GmbH**
**73447 Oberkochen (DE)**

(72) Erfinder:
• **BERNHARDT, Ralf**
**73432 Aalen (DE)**
• **LEITENBERGER, Werner**
**89520 Heidenheim (DE)**
• **MOSER, Gerd**
**73434 Aalen (DE)**

• **GRUPP, Günter**
**89558 Böhmenkirch (DE)**
• **FUCHS, Andreas**
**73492 Rainau (DE)**
• **PHILIPP, Sven**
**89551 Königsbronn (DE)**

(74) Vertreter: **Beyer, Andreas**
**Patentanwälte Bressel und Partner mbB**
**Potsdamer Platz 10**
**10785 Berlin (DE)**

(56) Entgegenhaltungen:
**EP-A1- 0 632 251 EP-A2- 1 832 416**
**DE-A1- 1 448 708 DE-A1- 19 527 019**
**GB-A- 2 098 759**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Koordinatenmessgerät (KMG) mit einer Basis und einer Führung, bei dem die Lage der Führung bestimmt werden kann zum Führen der Bewegung eines beweglichen Teils der KMG und ein Verfahren zur Bestimmung der Lage eines Teils eines Koordinatenmessgeräts. Insbesondere handelt es sich bei der Führung um eine Linearführung, die eine Linearbewegung entlang der Basis führt.

Zur Korrektur von geometrischen Führungsfehlern und von Führungsfehlern, die durch Verformungen bedingt sind, ist bei Koordinatenmessgeräten das Verfahren der CAA (Computer Aided Accuracy) bekannt, siehe zum Beispiel A. Weckenmann, B, Gawande, Koordinatenmesstechnik, Kapitel 6.1, Hanser Verlag, 1999, ISBN 3-446-17991-7. Es werden durch Kalibrierung Korrekturwerte aufgenommen und in einem Speicher bereit gestellt. Die Führungsfehleraufnahme erfolgt bei der CAA z.B. durch Messungen mit Laserinterferometern oder speziell bei Torsionsführungsfehlern mit elektronischen Neigungssensoren. Auch Kugel-/Lochplatten oder andere Kalibriernormale werden zur Aufnahme der Führungsfehler benutzt. Zur Korrektur elastischer Biegeanteile der Führungen ist auch die sogenannte Flächen-CAA bekannt.

Das CAA-Korrekturmodell basiert auf der Annahme, dass die Führungsfehler langzeitstabil, d.h. zum Zeitpunkt der Fehleraufnahme und zum Zeitpunkt der Werkstückmessung gleich sind, wobei zwischen diesen Zeitpunkten mehrere Monate oder Jahre liegen können.

Bei Koordinatenmessgeräten ergeben sich Führungsveränderungen aber auch durch Fundamentsetzungseffekte, Einflüsse durch die Werkstückmasse oder Temperaturänderungen. Diese Effekte sind zeitabhängig und nicht langzeitstabil wie die durch CAA korrigierten Führungsfehler. Sie werden als dynamische Führungsveränderungen oder dynamische Führungsfehler bezeichnet.

Um diese genauigkeitsrelevanten Führungsveränderungen zu minimieren, werden heutzutage eigensteife Fundamente oder eigensteife Gerätegrundkörper (Tischplatten) benötigt. Diese Fundamente sind meist aus zementähnlichem Material gegossen und haben über die Trocknungszeit (viele Monate) eine Schwindung, die nicht immer homogen abläuft. Das Fundament oder der Gerätegrundkörper kann sich dadurch verwinden. Eine relativ zum Fundament fixierte Führung ändert dadurch ihre Lage. Wenn zwei Linearführungen vorhanden sind, so können diese sich gegeneinander verwinden, was als Torsionsänderung oder Torsionsführungsfehler bezeichnet wird. Die Führungen sind dann nicht mehr parallel zueinander, wie gewünscht, sondern verlaufen windschief zueinander und/oder sind jeweils um ihre eigene Längsachse tordiert. Ein entlang beider Führungen linear bewegter Teil des KMG führt dabei eine Torsionsbewegung aus.

Torsionseffekte können sich auch bei asymmetrischer Werkstückbelastung, oder räumlichen Temperaturgradienten ergeben. Durch Klimatisierung kann der Temperaturfehler nahezu vollständig vermieden werden.

Der Aufwand für die Herstellung stabiler Fundamente ist hoch, wie auch für die bei einer Schwindung notwendige nachträgliche Wiederholung der Führungsfehleraufnahme. Auch der Transport schwerer Fundamente in einen Messraum macht die vorherige Kalibrierung direkt in der Fertigung unbrauchbar. Der Führungsfehler muss erneut aufgenommen werden.

GB 2098759 betrifft eine hochgenaue Dimensionsmessapparatur, umfassend eine Brückenstruktur, die beweglich auf parallelen Führungen angeordnet ist. Niveausensoren sind jeweils funktionell den Führungen zugeordnet und betriebsmäßig miteinander verbunden, wobei einer der Sensoren ein Differenzausgangssignal erzeugen kann, das eine relative Fehlausrichtung anzeigt. Das Signal wird an einen Servojack geleitet, der einer Führung zugordnet ist und die Führung zur Korrektur der Fehlausrichtung neu positioniert. Die Ausrichtung wird intervallmäßig geprüft und korrigiert. In alternativen Ausführungsformen kann jede Führung individuell eingestellt werden.

Stand der Technik aus den Gebieten der Maschinen und Bauwerke gibt Lösungen an, wie Verformungen erfasst werden können:

EP 1832416 A2 betrifft eine Druckmaschinenmessanordnung zur Erfassung von Verformungen eines Maschinenfundaments der Druckmaschine mit mehreren hydrostatischen Messeinheiten. Die Messeinheiten sind flüssigkeitsseitig untereinander gekoppelt.

DE 1448708 A2 betrifft ein elektrohydraulisches System zur Höhenmessung und Überwachung der relativen Höhenlage von Teilen von Maschinen oder Fundamenten. Die Messeinrichtung besteht aus zwei elektrohydraulischen Gebersystemen mit schwimmergesteuerten Gebersystemen.

DE 19527019 A1 erwähnt das Problem, dass eine Turbinenanlage gelegentlich eine Überprüfung erfordert, ob Maschinenteile sich sich noch jeweils an ihrer vorgegebenen Position befinden. Eine erwähnte Messeinrichtung ist die sogenannte Schlauchwaage.

EP 0632251 A1 offenbart ein Oberflächenniveau-Überwachungssystem für eine Gerüstvorrichtung mit einer Mehrzahl Verlagerungssensoreinrichtungen und einem Verbindungsrohr, in das ein Fluid eingefüllt ist.

Eine Aufgabe der Erfindung war die Bereitstellung eines Koordinatenmessgeräts, mit dem die eingangs beschriebenen Führungsfehler korrigiert werden können. Insbesondere sollen Führungsfehler, die sich im Laufe der Zeit durch Fundamentsetzungseffekte, Einflüsse durch die Werkstückmasse oder Temperaturänderungen ergeben, korrigiert werden können.

Nach einer grundlegenden Idee der Erfindung stellt eine mit Flüssigkeit gefüllte Vorrichtung aus kommunizierenden Röhren ein Referenzsystem für die Bestimmung des Führungsfehlers dar. In den Röhren stellen sich gleich hohe Flüssigkeitsoberflächen ein. Eine gedachte Verbindungslinie von einem Punkt auf einer Flüssigkeitsoberfläche in einer Röhre zu einem weiteren Punkt auf einer anderen Flüssigkeitsoberfläche in einer anderen Röhre ergibt eine horizontale Linie. Mindestens drei Punkte auf drei verschiedenen Flüssigkeitsoberflächen in drei verschiedenen Röhren spannen eine horizontale Ebene auf, die ein Referenzssytem darstellt bzw ein Referenzssystem gleich hoher Flüssigkeitsoberflächen darstellt. Wenn die Flüssigkeitsoberflächen jeweils einen konvexen, d.h. nach oben gewölbten Meniskus ausbilden (z.B. Quecksilber in Glasröhre), werden als Punkte zur Bildung einer horizontalen Referenzlinie bzw. zur Bildung einer horizontalen Referenzebene vorzugsweise die jeweils höchsten Punkte des Meniskus gewählt. Wenn die Flüssigkeitsoberflächen jeweils einen konkaven, d.h. nach unten gewölbten Meniskus ausbilden (z.B. Wasser in Glasröhre), werden als Punkte vorzugsweise die jeweils tiefsten Punkte des Meniskus gewählt.

Die Aufgabe wird insbesondere gelöst mit einem Koordinatenmessgerät nach Anspruch 1. Vorteilhafte Ausgestaltungen sind in den abhängigen Patentansprüchen angegeben. Weiterhin wird die Aufgabe durch das in den beigefügten Patentansprüchen angegebene Verfahren gelöst.

Die Erfindung betrifft insbesondere ein Koordinatenmessgerät (KMG), aufweisend

- eine Basis
- mindestens eine relativ zur Basis fixierte Führung, durch die eine Bewegung eines beweglichen Teils geführt ist, insbesondere eine Linearführung, die vorzugsweise eine Horizontalbewegung des beweglichen Teils führt,
- eine mit Flüssigkeit gefüllte Vorrichtung aus kommunizierenden Röhren, in denen sich bezogen auf das Gravitationsfeld der Erde gleich hohe Flüssigkeitsoberflächen einstellen,
- den Röhren zugeordnete Messeinrichtungen, welche jeweils den Flüssigkeitspegel in der Röhre und/oder den Höhenunterschied zwischen der Flüssigkeitsoberfläche und einem Fixpunkt, welcher relativ zu der Führung unbeweglich ist, bestimmen
  wobei das Koordinatenmessgerät dazu eingerichtet ist,
- aus den bestimmten Flüssigkeitspegeln oder aus Änderungen der Höhenunterschiede Informationen über die Lage des Teils des Koordinatenmessgeräts in Bezug auf das Koordinatensystem der Erde zu ermitteln, und
- die aus den Flüssigkeitspegeln oder aus Änderungen der Höhenunterschiede gewonnenen Informationen für den Betrieb des Koordinatenmessgeräts zu nutzen und Messsignale aus der Vermessung zumindest eines Werkstücks mit dem Koordinatenmessgerät unter Verwendung der gewonnenen Informationen auszuwerten und/oder zu korrigieren.

Die Vorrichtung aus kommunizierenden Röhren ist vorzugsweise ein integraler Bestandteil des KMG. Sie kann an anderen Teilen des KMG fixiert sein, beispielsweise an der Basis oder an fest mit der Basis verbundenen Teilen, z.B. Stützen einer Führung oder an einer oder mehreren Führungen selbst. Dadurch wird ein eindeutiger Bezug zwischen den Röhren und der Basis bzw. dem Teil und zwischen den Röhren und anderen mit der Basis fest verbundenen Teilen hergestellt. Der Flüssigkeitspegel, bzw. der Abstand zwischen Flüssigkeitsoberfläche und einem Referenzpunkt an der Basis oder einem mit der Basis fest verbundenen Teil, ist ein Maß für eine Höhenposition eines zur Flüssigkeitsoberfläche benachbarten Bereichs des KMG relativ zum Referenzsystem gleich hoher Flüssigkeitsoberflächen in der Vorrichtung.

Die Vorrichtung aus kommunizierenden Röhren kann aus mehreren Teilen zusammengesetzt sein. Beispielsweise kann die Vorrichtung mehrere Röhren aufweisen, die untereinander durch Verbindungsstücke, z.B. Verbindungsröhren verbunden sind. Die Verbindungsstücke können aus einem flexiblen Material oder einem starren Material gefertigt sein. Die Röhren können ebenfalls aus einem flexiblen oder aus einem starren Material bestehen.

Im Falle einer Führung allgemein wird unter der Lage der Führung die Position, Relativposition und/oder Ausrichtung der Führung verstanden. Im Falle einer Linearführung ist als Lage insbesondere die Relativposition der Enden der Führung relativ zu einem Referenzsystem gleich hoher Flüssigkeitsoberflächen bestimmbar, wenn im Bereich jedes Endes eine Röhre angeordnet ist. Die Referenzpunkte können insbesondere Enden einer weiteren, etwa parallelen Linearführung sein oder entsprechende weitere Röhren im Bereich der Enden der zweiten Linearführung.

Die oberen Endbereiche der Röhren können sich auf dem Höhenniveau der zugeordneten Führung befinden. Dies ist jedoch nicht zwingend erforderlich, wenn die Führung fest, z.B. über die Basis oder einen anderen im Wesentlichen formstabilen Teil des KMG, mit der Röhre verbunden ist.

Unter einer Röhre wird jeder mit Flüssigkeit befüllbare Körper verstanden, der ein Ansteigen oder Abfallen der Flüssigkeit ermöglicht, wenn sich die Höhe der Röhre oder einer kommunizierenden Röhre im Gravitationsfeld verändert. Z.B. kann die Basis auch eine sich in vertikaler Richtung erstreckende Aussparung aufweisen, die die Flüssigkeit enthält und mit anderen Aussparungen oder anderen Röhren kommuniziert, d.h. verbunden ist.

Relativ zu diesem Referenzsystem kann die Lage der Führung und insbesondere die Änderung der räumlichen Lage der Führung bestimmt werden, welche beispielsweise durch Setzungs-, Verwindungs- oder Volumenschwindungseffekte der Basis bedingt sind. Der Begriff Basis umfasst inhaltlich die Begriffe "Fundament" und "Grundkörper". Die Basis weist z.B. im Idealfall eine ebene, vorzugsweise horizontale Fläche auf, die in ihrer Lage und Form nicht veränderlich sein sollte. Änderungen von diesem Idealfall können mit einem erfindungsgemäßen KMG ermittelt werden. Materialien, aus denen die Basis gefertigt ist, sind z.B. Stein, wie z.B. Granit, Beton und zementähnliche Materialien. Allgemein sind alle Formen und Materialien, die für Fundamente und Grundkörper für KMG bekannt sind, einsetzbar.

Der Begriff "relativ zur Basis fixierte Führung" bedeutet, dass die Führung mit der Basis starr verbunden ist. Die Führung kann direkt an der Basis angeordnet sein oder über Stützen mit der Basis verbunden und dadurch von der Basis beabstandet sein. Sie kann auch in die Basis eingelassen sein.

Durch die Führung oder die Führungen ist eine Bewegung eines beweglichen Teils geführt. An dem beweglichen Teil kann insbesondere über weitere bewegliche Teile ein Tastkopf eines KMG angebracht sein, wobei der Tastkopf relativ zu dem beweglichen Teil seinerseits beweglich sein kann. Das bewegliche Teil kann verschieden gestaltet sein, und es kann aus einem oder mehreren Einzelteilen, wie z.B. von oben nach unten verlaufenden Stützen und Querträgern, zusammengesetzt sein. Ein spezielles Beispiel für ein bewegliches Teil ist ein Portal eines KMG in Portalbauweise, wie unten definiert. Ein weiteres spezielles Beispiel ist eine Brücke eines Gantry-KMG, wie unten definiert. Der Tastkopf kann an einer Pinole befestigt sein, welche beispielsweise relativ zu einem Querträger oder einer Brücke beweglich ist, und vorzugsweise linear entlang einer Brücke oder eines Querträgers verschiebbar ist.

Ein spezielles KMG der vorliegenden Erfindung, nachfolgend auch bezeichnet als Portal-KMG, weist ein Portal auf, das mindestens zwei von unten nach oben verlaufende Stützen und mindestens einen zwischen den Stützen verlaufenden Querträger aufweist. Das Portal ist entlang mindestens zwei parallel zueinander und parallel oder im Wesentlichen parallel zur Basis verlaufender Linearführungen bewegbar. Die Stützen sind an einem unteren Ende jeweils an mindestens einer der Führungen geführt. Am Querträger ist der Tastkopf angeordnet, der insbesondere über eine Pinole vorzugsweise entlang dem Querträger verschiebbar (üblicherweise als X-Richtung bezeichnet) und relativ zum Portal von oben nach unten, oder umgekehrt, verschiebbar (Z-Richtung) ist. Bei dieser Koordinatendefinition ist das Portal in Y-Richtung verschiebbar. Die Führungen und die Röhren sind relativ zu der Basis fixiert.

Ein weiteres spezielles KMG der vorliegenden Erfindung, nachfolgend auch bezeichnet als Gantry-KMG, weist mindestens zwei parallel zueinander und parallel oder im Wesentlichen parallel zur Basis verlaufende Führungen auf. Jede Führung wird von mindestens einer von unten nach oben verlaufenden Stütze getragen, wobei die Stützen relativ zur der Basis fixiert sind. Quer zwischen den Führungen erstreckt sich eine von den Führungen geführte, verschiebbare Brücke. An der Brücke ist der Tastkopf entlang der Brücke verschiebbar (X-Richtung) und insbesondere über eine Pinole von oben nach unten, oder umgekehrt, verschiebbar (Z-Richtung) angeordnet. Die Brücke ist nach dieser Koordinatendefinition entlang der Führungen in Y-Richtung verschiebbar.

Die Führung kann verschiedenste Formen aufweisen, insbesondere die Form zumindest einer Führungsschiene, einer Aussparung oder eines Auflagers. Insbesondere sind alle Arten Führungen denkbar, die bei Koordinatenmessgeräten bekannt sind.

In einer speziellen Ausführungsform weist das KMG zwei parallel zueinander verlaufende Linearführungen auf.

Den Röhren sind Messeinrichtungen zugeordnet, welche jeweils den Flüssigkeitspegel in der Röhre und/oder den Höhenunterschied zwischen der Flüssigkeitsoberfläche und einem Fixpunkt, welcher relativ zu der Führung unbeweglich ist, bestimmen. Da der Fixpunkt relativ zu der Führung unbeweglich ist, vollzieht er jede Änderung der räumlichen Lage der Führung mit.

Der Fixpunkt ist vorzugsweise im Bereich der Führung angeordnet. Er kann aber auch an einer Stütze der Führung angeordnet sein, sofern eine solche vorhanden ist. Fixpunkte der verschiedenen Röhren liegen vorzugsweise auf gleicher Höhe.

Die vom Sensor zu messende Größe ist der Flüssigkeitspegel in der Röhre und/oder der Höhenunterschied zwischen der Flüssigkeitsoberfläche und einem Fixpunkt, welcher relativ zu der Führung unbeweglich ist. Im Rahmen dieser Messaufgabe ist die Art und Bauweise der verwendbaren Sensoren nicht auf ein bestimmtes Messprinzip beschränkt. Beispiele sind Sensoren mit einem mechanischen Taster, insbesondere Sensoren mit einem Schwimmer, welcher auf der Flüssigkeitsoberfläche aufliegt.

Bei dem Sensor kann es sich z.B. auch um einen magnetoresistiven Sensor, einen Hallsensor, der gemäß dem elektro-magnetischen Halleffekt funktioniert, einen optischen Sensor, einen kapazitiven, induktiven, oder frequenzsensitiven Sensor oder um einen Sensor handeln, der gemäß zumindest einer der genannten Funktionsweisen und/oder zumindest einer nicht genannten Funktionsweise arbeitet. Optische Sensoren erfassen z.B. eine von mehreren Markierungen, die an dem Messkörper ausgebildet ist, wenn sich die Markierung aus Sicht des Sensors vorbeibewegt. Bei einer anderen Art optischer Sensoren wird z.B. eine Laser-Triangulation durchgeführt und/oder wie bei einem Interferometer ein Vergleich mit einem Vergleichslichtstrahl durchgeführt, der nicht von dem Messkörper beeinflusst wird.

Die Messeinrichtungen können insbesondere optische Sensoren aufweisen, die ausgestaltet sind, den Abstand der Flüssigkeitsoberfläche zu dem Ort des Sensors zu messen. Ein Beispiel sind Lasertriangulationssensoren. In dieser Variante ist der Ort des Sensors der Fixpunkt zur Bestimmung des Höhenunterschieds. Ein Vorteil optischer Sensoren ist, dass dadurch eine berührungslose Messung möglich ist. Dadurch sind eine mögliche gegenseitige mechanische Beeinflussung des Sensors und der Flüssigkeit, beispielsweise durch Reibung, und daraus resultierende Hysterese-Effekte ausgeschlossen.

Bestimmt werden kann bei dem erfindungsgemäßen KMG beispielsweise der Torsionsführungsfehler zweier paralleler Linearführungen und die Torsion einer sich entlang den Führungen verschiebenden Brücke, wobei die Torsion der Brücke auf eine parallel zu den Führungsschienen und zwischen den Führungsschienen verlaufende Achse bezogen werden kann, insbesondere bei einem Portal-KMG oder einem Gantry-KMG. Auch die Höhe einer Führung kann relativ zum Referenzsystem ermittelt werden. Diese Beispiele sind nicht abschließend und andere Auswertungen sind bei unterschiedlichen Anordnungen von Röhren denkbar.

Unterschiedliche Anzahlen und Anordnungen von Röhren sind möglich. Das KMG weist mindestens zwei, vorzugsweise mindestens drei, besonders bevorzugt mindestens 4 Röhren und am meisten bevorzugt genau 4 Röhren auf.

In einer speziellen Variante eines KMG ist oberhalb jeder Röhre eine Messeinrichtung angeordnet, insbesondere ein oben beschriebener optischer Sensor, die ausgestaltet ist, den Abstand der Flüssigkeitsoberfläche zu dem Ort des Sensors zu messen.

Bei einer Variante eines KMG sind die Röhren an der Basis befestigt. Beispielsweise können in der Basis Öffnungen vorhanden sein, welche die Basis durchdringen und in welchen die Röhren befestigt sind.

Die Verbindungen zwischen den Röhren können beispielsweise in oder unter der Basis angeordnet sein oder unter einem Tisch, der die Basis enthält.

In einer Ausführungsform weist das KMG zwei parallel zueinander verlaufende, von der Basis beabstandete Führungen auf, wobei jede Führung von mindestens zwei Stützen getragen wird. Ein Beispiel für eine solche Ausführungsform ist ein speziell ausgestaltetes Gantry-KMG (allgemeine Definition siehe oben). Insofern wird auf die Merkmale Bezug genommen, die weiter oben für ein Gantry-KMG definiert wurden.

In einer speziellen Variante der zuvor beschriebenen Ausführungsform sind Stützen im Bereich der Enden der beiden Führungen angeordnet. Jede der beiden Führungen weist vorzugsweise zwei Enden auf, sodass an den beiden Enden jeder Führung eine Stütze angeordnet ist und das KMG insgesamt vier Stützen an den Enden der Führungen aufweist. Außerdem können weitere Stützen vorhanden sein, oder es können zwei oder mehrere Stützen durch einen gemeinsamen Block ersetzt werden.

Bei einem KMG wie in den obigen Absätzen beschrieben, ist vorzugsweise jede der vorhandenen Röhren an einer Stütze befestigt, wobei nicht an jeder Stütze eine Röhre angebracht sein muss, aber an jeder Stütze eine Röhre angebracht sein kann.

In einer besonders vorteilhaften Variante sind Stützen im Bereich der Enden der beiden Führungen angeordnet und an jeder dieser Stützen ist eine Röhre angebracht, sodass allen Enden der Führungen eine Röhre zugeordnet ist. Die Anordnung im Bereich der Enden der Führungen hat den Vorteil, dass eine Änderung der räumlichen Lage der Führung besser messbar ist. Wenn beispielsweise eine Auslenkung der Führung aus einer horizontalen in eine schräge Lage um einen bestimmten Winkel detektiert werden soll, dann ist die relative Lageänderung von einem Ende der Führung relativ zum anderen Ende der Führung am größten und damit am besten messbar.

In einer speziellen Variante reichen die Röhren bis an das Höhenniveau der Führungen.

In einer weiteren Ausführungsform eines Koordinatenmessgeräts sind die Führungen an der Basis angeordnet. In dieser Ausführungsform sind die Führungen, beispielsweise Führungsschienen, direkt auf die Basis aufgebracht oder in diese eingebracht und nicht durch Stützen oder anderweitige Abstandhalter von der Basis beabstandet. Die Anordnung von Führungen an der Basis findet beispielsweise bei den zuvor definierten Portal-KMG häufig Verwendung. Somit ist ein weiterer Gegenstand der Erfindung ein

Portal-KMG, bei dem die Führungen an der Basis angeordnet sind.

In einer noch spezielleren Variante der zuvor dargestellten Ausführungsform sind die Röhren im Bereich der Enden der Führungen angeordnet. Die Röhren können beispielsweise an der Basis im Bereich der Enden der Führungen angeordnet sein, oder an den Enden der Führungen selbst. Die Anordnung im Bereich der Enden der Führungen hat den Vorteil, dass eine Änderung der räumlichen Lage der Führung besser messbar ist. Wenn beispielsweise eine Auslenkung der Führung aus einer horizontalen in eine schräge Lage um einen bestimmten Winkel detektiert werden soll, dann ist die relative Lageänderung von einem Ende der Führung relativ zum anderen Ende der Führung am größten und damit am besten messbar.

Die Röhren können auch an der Basis oder an Stützen, z.B. im Fall eines Portal-KMG, fixiert sein und der Sensor an der Führung.

Die in der Vorrichtung aus kommunizierenden Röhren verwendete Flüssigkeit ist nicht besonders beschränkt. Beispiele für Flüssigkeiten sind Wasser, Öle, organische Flüssigkeiten. Vorzugsweise weist die Flüssigkeit eine niedrige Viskosität auf, sodass sich gleich hohe Flüssigkeitsoberflächen in möglichst kurzer Zeit einstellen. Ebenso ist es bevorzugt, dass die eingesetzte Flüssigkeit einen möglichst niedrigen Dampfdruck aufweist.

Um die Oberflächenspannung einer Flüssigkeit in der Röhre, insbesondere von Wasser, zu reduzieren, können der Flüssigkeit Tenside oder andere Mittel zugegeben werden. Des Weiteren kann die Flüssigkeit eingefärbt werden. Durch das Einfärben entsteht eine optisch weniger durchlässige, oder gegebenenfalls sogar undurchlässige, Flüssigkeitsoberfläche, was für eine optische Messung eines Flüssigkeitspegels und/oder eines Höhenunterschieds zwischen der Flüssigkeitsoberfläche und einem Fixpunkt vorteilhaft ist.

Um einen Schwund der Flüssigkeit in der Vorrichtung durch Verdunstung zu vermeiden oder zu begrenzen, sind die kommunizierenden Röhren in einer Ausführungsform eines KMG ein geschlossenes System. Das System kann permanent geschlossen sein oder die kommunizierenden Röhren können Öffnungen mit abnehmbaren Verschlüssen aufweisen. Beispielsweise können die Röhren an ihren Enden Öffnungen aufweisen, die durch Verschlüsse verschließbar sind. Die Verschlüsse sind in einer Ausführungsform durchlässig für Strahlung im Wellenlängenbereich des Lichts und/oder im Wellenlängenbereich anderer Messstrahlung eines Sensors. In dieser Ausführungsform sind vorzugsweise oberhalb der Röhren optische Sensoren angeordnet. Ein Messtrahl eines optischen Sensors kann, ausgehend vom Sensor, den Verschluss durchdringen und bis zur Flüssigkeitsoberfläche gelangen. Von dort kann der Strahl nach Reflexion auf dem umgekehrten Weg zurück zum Sensor gelangen. Die Verschlüsse können aber auch zum Zweck der Messung vorübergehend abgenommen werden.

Die Erfindung betrifft auch ein Verfahren zur Bestimmung der Lage eines Teils eines Koordinatenmessgeräts, insbesondere einer Führung zum Führen der Bewegung eines beweglichen weiteren Teils des Koordinatenmessgeräts. Es werden folgende Schritte ausgeführt:

a) Es wird der Flüssigkeitspegel jeweils in einer von einer Mehrzahl miteinander kommunizierender Röhren in Bezug auf jeweils einen Referenzpunkt, der der Röhre zugeordnet ist, bestimmt.

b) Aus den bestimmten Flüssigkeitspegeln werden Informationen über die Lage des Teils des Koordinatenmessgeräts in Bezug auf das Koordinatensystem der Erde gewonnen.

c) Die aus den Flüssigkeitspegeln gewonnenen Informationen werden für den Betrieb des Koordinatenmessgeräts genutzt, wobei Messsignale aus der Vermessung zumindest eines Werkstücks mit dem Koordinatenmessgerät unter Verwendung der gewonnenen Informationen ausgewertet und/oder korrigiert werden. Vorzugsweise werden die Informationen dazu verwendet, einen geometrischen Bezug zwischen verschiedenen Messsignalen der Vermessung eines Werkstücks herzustellen, die bei verschiedenen Positionen und/oder Ausrichtungen eines beweglichen Teils des Koordinatenmessgeräts (z.B. eines entlang von Linearführungen beweglichen Teils) gewonnen werden.

Dieses Verfahren kann zu späteren Zeitpunkten wiederholt werden, um zu diesen späteren Zeitpunkten Informationen für den Betrieb des Koordinatenmessgeräts zu erhalten und entsprechend Schritt c) auszuwerten.

Insbesondere können die Flüssigkeitspegel daher dazu genutzt werden, Abweichungen zwischen der tatsächlich ausgeführten Bewegung des beweglichen Teils des Koordinatenmessgeräts von einer erwarteten oder idealen Bewegung festzustellen und/oder zu korrigieren. Ausgestaltungen und Vorteile des Verfahrens ergeben sich insbesondere auch aus der Beschreibung des Koordinatenmessgeräts. So handelt es sich z.B. bei dem Teil, dessen Lage in Bezug auf das Koordinatensystem der Erde mit Hilfe der Flüssigkeitspegel in den Röhren bestimmt wird, um die Basis des KMG und/oder um fest mit der Basis verbundene Teile, wie z.B. die oben genannten Stützen eines Gantry-KMG oder eine oder mehrere Führungen.

Wie auch ein KMG mit einem System aus kommunizierenden Röhren hat das Verfahren den Vorteil, dass durch die miteinander kommunizierenden Röhren ein Referenzsystem zur Verfügung steht, das relativ zu dem Koordinatensystem der Erde bzw. zu dem Gravitationsfeld der Erde (oder eines anderen Himmelskörpers) fest in Beziehung steht. Das Referenzsystem bilden nicht die Röhren, sondern die Flüssigkeitsoberflächen in den Röhren. Die Röhren selbst sind dagegen dem Koordinatenmessgerät zugeordnet und bewegen sich mit den Bewegungen und/oder Veränderungen zumindest eines Teils des KMG. Daher lassen sich durch Messung der Flüssigkeitspegel in den Röhren die oben genannten Informationen gewinnen.

Bei einer bevorzugten Ausgestaltung des Verfahrens wird die Lage des Teils des KMG in Bezug auf das Koordinatensystem der Erde bezüglich eines rotatorischen Freiheitsgrades der Bewegung oder bezüglich mehrerer rotatorischer Freiheitsgrade der Bewegung ausgewertet. Insbesondere lässt sich bereits aus den beiden Flüssigkeitspegeln von zwei miteinander kommunizierenden Röhren ermitteln, welche rotatorische Position eine gedachte gerade Verbindungslinie bezüglich des Erdkoordinatensystems hat, wobei die Verbindungslinie die Referenzpunkte der Röhren miteinander verbindet. Die zugeordnete Rotationsachse des Freiheitsgrades verläuft quer zur Verbindungslinie in horizontaler Richtung. Entsprechend kann bei drei oder mehr miteinander kommunizierenden Röhren die entsprechende rotatorische Position bezüglich zweier voneinander unabhängiger Freiheitsgrade der Bewegung bestimmt werden, d.h. es können zumindest zwei nicht zueinander parallele Verbindungslinien bezüglich ihrer rotatorischen Position relativ zum Erdkoordinatensystem bestimmt werden. Statt der Lage der Verbindungslinien kann auch die Lage der Ebene durch mindestens drei Referenzpunkte bezüglich dem Erdkoordinatensystem (bzw. bezüglich der Lage der Flüssigkeitsoberflächen) bestimmt werden. Bei den Referenzpunkten handelt es sich um die oben genannten Referenzpunkte der einzelnen Röhren. Dabei muss der Referenzpunkt nicht in dem Material der Röhren oder an der Oberfläche des Materials liegen. Vielmehr kann z.B. der Referenzpunkt durch den jeweiligen Sensor definiert sein, der zur Messung eines Flüssigkeitspegels verwendet wird.

In einem weiteren Aspekt betrifft die Erfindung ein Verfahren zur Bestimmung der Lage eines Teils eines Koordinatenmessgeräts, insbesondere einer Führung zum Führen der Bewegung eines beweglichen weiteren Teils des Koordinatenmessgeräts, und zur Korrektur dynamischer Führungsfehler des Koordinatenmessgeräts, wobei bei dem Verfahren

- eine mit Flüssigkeit gefüllte Vorrichtung aus kommunizierenden Röhren, in denen sich bezogen auf das Gravitationsfeld der Erde gleich hohe Flüssigkeitsoberflächen einstellen, und
- den Röhren zugeordnete und relativ zu dem Teil des Koordinatenmessgeräts unbewegliche Messeinrichtungen, welche jeweils den Flüssigkeitspegel in der Röhre und/oder den Höhenunterschied zwischen der Flüssigkeitsoberfläche und einem Fixpunkt, welcher relativ zu dem Teil des Koordinatenmessgeräts unbeweglich ist, bestimmen

eingesetzt werden, und

a) zu einem Zeitpunkt $t_1$ an mehreren Röhren mit der zugeordneten Messeinrichtung jeweils der Flüssigkeitspegel in der Röhre und/oder der Höhenunterschied zwischen der Flüssigkeitsoberfläche und einem Fixpunkt, welcher relativ zu dem Teil unbeweglich ist, bestimmt wird,

b) zu einem späteren Zeitpunkt $t_2$ an mehreren Röhren mit der zugeordneten Messeinrichtung jeweils der Flüssigkeitspegel in der Röhre und/oder der Höhenunterschied zwischen der Flüssigkeitsoberfläche und einem Fixpunkt, welcher relativ zu dem Teil unbeweglich ist, bestimmt wird, und

c) bei jeder Röhre der Flüssigkeitspegel in der Röhre zum Zeitpunkt $t_2$ mit dem der Flüssigkeitspegel in der Röhre zum Zeitpunkt $t_1$ verglichen wird und die Änderung des Flüssigkeitspegels ermittelt wird, und/oder bei jeder Röhre der Höhenunterschied zwischen der Flüssigkeitsoberfläche und dem Fixpunkt zum Zeitpunkt $t_2$ mit dem Höhenunterschied zwischen der Flüssigkeitsoberfläche und dem Fixpunkt zum Zeitpunkt $t_1$ verglichen wird und die Änderung des Höhenunterschieds ermittelt wird,

d) aus den Änderungen der Flüssigkeitspegel und/oder aus den Änderungen der Höhenunterschiede an mehreren Röhren die Änderung der Lage des Teils des Koordinatenmessgeräts ermittelt wird und ein Wert der Änderung der Lage des Teils erhalten wird,

e) die Änderung der Lage des Teils ergänzend zu Korrekturwerten berücksichtigt wird, die durch eine Computer Aided Accuracy ermittelt werden, wobei der Wert der Änderung der Lage des Teils zu einem Führungsfehlerwert addiert wird, der durch die Computer Aided Accuracy ermittelt wird, sodass ein Gesamtwert des Führungsfehlers erhalten wird.

Dem Verfahren liegt eine relative Auswertung zugrunde, bei der ein (zeitlich konstanter) Absolutmessfehler der Messeinrichtung keine Rolle spielt. Vorzugsweise werden Sensoren eingesetzt, die untereinander eine gleiche Nullpunktdrift aufweisen.

Die Bedeutung des verwendeten Begriffs "Fixpunkt" ist identisch zu dem ebenfalls verwendeten Begriff "Referenzpunkt".

In Schritt d) des Verfahrens werden die Änderungen des Flüssigkeitspegels oder des Höhenunterschieds an zwei oder mehr miteinander kommunizierender Röhren zur Auswertung verwendet, um eine Aussage über die Änderung der Lage des Teils zu erhalten. In Schritt d) kann aus den Änderungen in verschiedenen Röhren beispielsweise ein Winkel ermittelt werden, um den das Teil sich relativ zum Referenzsystem der gleich hohen Flüssigkeitsoberflächen zwischen zwei gewählten Zeitpunkten, wie $t_1$ und $t_2$, geneigt hat.

Betrachtet man zum Beispiel die Änderungen an zwei miteinander kommunizierenden Röhren die an zwei verschiedenen Stellen des Teils angeordnet sind (z.B. den Enden einer Linearführung) so bedeutet eine Änderung des Flüssigkeitspegels in beiden Röhren in unterschiedliche Richtungen, dass sich die Lage des Teils durch Rotation relativ zum Referenzsystem aus gleich hohen Flüssigkeitsoberflächen geändert hat.

Im speziellen Fall von zwei Führungen, insbesondere parallel zueinander verlaufenden Linearführungen, kann für jede einzelne Führung festgestellt werden, ob sie sich zwischen zwei gewählten Zeitpunkten relativ zum Referenzsystem geneigt hat. Durch Vergleich der Neigungen der beiden Führungen kann ermittelt werden, ob und um welchen Winkel sich beide Führungen zwischen zwei gewählten Zeitpunkten relativ zueinander verwunden haben, und man erhält die Torsionsänderung.

Nach Durchführung des Verfahrens erhält man im Ergebnis eine Information über die Änderung der Lage des Teils zum Zeitpunkt $t_2$.

Die Ermittlung der Änderung der Lage des Teils aus den Änderungen der Flüssigkeitspegel oder aus den Änderungen der Höhenunterschiede an den einzelnen Röhren wird in den beigefügten Ausführungsbeispielen an Spezialfällen illustriert.

Für das Verfahren können alle zuvor beschriebenen KMG eingesetzt werden. Das Verfahren eignet sich insbesondere zur Korrektur dynamischer, zeitlich veränderlicher Führungsfehler wie eingangs definiert. Insbesondere kann die Torsion zweier Führungen relativ zueinander mit dem Verfahren ermittelt werden. Ein spezieller Torsionsführungsfehler ist die sogenannte yRy-Torsion, die in den beigefügten Ausführungsbeispielen anhand von Zeichnungen erläutert ist.

Zu Beginn des Verfahrens können bei nach erstmaliger Durchführung des Schrittes a) die ermittelten Flüssigkeitspegel in der Röhre und/oder der ermittelte Höhenunterschied zwischen der Flüssigkeitsoberfläche und dem Fixpunkt auf Null gesetzt werden, sodass man nach erstmaliger Durchführung des Schrittes b) direkt die Änderungen der Flüssigkeitspegel bzw. die Änderungen der Höhenunterschiede zum Zeitpunkt $t_2$ erhält. Die Nulleinstellung kann zu späteren Zeitpunkten wiederholt werden, beispielsweise nach Durchführung des unten beschriebenen Schrittes e), wobei dies nicht zwingend ist. Alternativ zu einer Nulleinstellung können auch die zum Zeitpunkt $t_1$ ermittelten Werte gespeichert werden, um für weitere Schritte, insbesondere die Berechnung des Schrittes c), zu Verfügung zu stehen.

Bei dem zuvor beschriebenen Verfahren kann die Schrittfolge b) -d) einmal zu einem noch späteren Zeitpunkt als $t_2$ wiederholt werden, oder die Schrittfolge b) -d) kann mehrmals zu verschiedenen, aufeinander folgenden, noch späteren Zeitpunkten als $t_2$ wiederholt werden. Optional wird das Verfahren nach dem Schritt d) fortgesetzt, indem

f) zu einem Zeitpunkt $t_x$ an mehreren Röhren mit der zugeordneten Messeinrichtung jeweils der Flüssigkeitspegel in der Röhre und/oder der Höhenunterschied zwischen der Flüssigkeitsoberfläche und einem Fixpunkt, welcher relativ zu dem Teil unbeweglich ist, bestimmt wird, wobei x eine ganze Zahl $\geq 3$ ist, und

g) bei jeder Röhre der Flüssigkeitspegel in der Röhre zum Zeitpunkt $t_x$ mit dem Flüssigkeitspegel in der Röhre zum Zeitpunkt $t_{x-1}$ oder zum Zeitpunkt $t_1$ verglichen wird und die Änderung des Flüssigkeitspegels ermittelt wird, und/oder bei jeder Röhre der Höhenunterschied zwischen der Flüssigkeitsoberfläche und dem Fixpunkt zum Zeitpunkt $t_x$ mit dem Höhenunterschied zwischen der Flüssigkeitsoberfläche und dem Fixpunkt zum Zeitpunkt $t_{x-1}$ oder zum Zeitpunkt $t_1$ verglichen wird und die Änderung des Höhenunterschieds ermittelt wird,

h) aus den Änderungen der Flüssigkeitspegel oder aus den Änderungen der Höhenunterschiede an den verschiedenen Röhren die Änderung der Lage des Teils ermittelt wird,

wobei die Sequenz der Schritte f)-h) einfach oder mehrfach durchgeführt wird, und wobei x mit jeder Wiederholung der Sequenz x um +1 ansteigt.

Verschiedene Indices x bei dem Zeitpunkt $t_x$ bedeuten unterschiedliche Zeitpunkte. Je höher der Index gewählt ist, desto später liegt der Zeitpunkt. Die zeitlichen Zwischenräume zwischen den Zeitpunkten müssen nicht identisch lang sein. Die Zeitabstände können beliebig gewählt werden, beispielsweise im Bereich von Minuten, Stunden, Tagen oder Wochen.

Bei der erstmaligen Durchführung der Schritte f) - h) wird der Index x auf x=3 gesetzt. Es handelt sich dabei um einen Zeitpunkt, der später ist als $t_2$ aus Schritt b). Wird die Sequenz der Schritte f) - h) ein zweites mal durchgeführt, so ist x=4 und der entsprechende Zeitpunkt $t_4$ ist später als $t_3$.

Schritt f) ist analog zu Schritt b). Bei Schritt g) kann gewählt werden, ob die Änderung des Flüssigkeitspegels oder die Änderung des Höhenunterschieds zum Zeitpunkt $t_x$ mit Bezug auf den Anfangswert $t_1$ oder mit Bezug auf den zeitlich vorhergehenden Wert $t_{x-1}$, ermittelt wird. Vorzugsweise wird der zeitlich vorhergehende Wert $t_{x-1}$ dem Vergleich und der Differenzbildung zugrunde gelegt. Bei letzterer Methode kann die Änderung des Flüssigkeitspegels oder die Änderung des Höhenunterschieds und die daraus ermittelte Änderung der Lage des Teils zwischen zwei beliebigen Zeitpunkten, die ausgewählt sind aus $t_1$, $t_2$ und $t_x$, ermittelt werden, indem man die Änderungswerte benachbarter Zeitpunkte addiert. Die Änderung zwischen $t_1$ und $t_3$ (x=3) kann beispielsweise ermittelt werden, indem man

1. die Änderung zwischen $t_1$ und $t_2$ ermittelt,
2. die Änderung zwischen $t_2$ und $t_3$ ermittelt und
3. beide Werte aus 1. und 2. addiert.

Zu verschiedenen Zeitpunkten $t_1$, $t_2$ und $t_x$ erhaltene Änderungswerte können untereinander verglichen werden, und die Plausibilität eines späteren Änderungswertes kann auf Basis vorhergehender Werte zu früheren Zeitpunkten geprüft werden. Nicht plausible Werte können ausgefiltert werden. Eine Filterung oder Eliminierung von sogenannten Ausreißern kann beispielsweise bezogen auf die Standardabweichung oder Splinefilter erfolgen.

Werte zu einem Zeitpunkt $t_1$, $t_2$ und $t_x$ können jeweils ein Mittelwert aus mehreren Einzelmesswerten sein. Mehrere Messwerte zur Bestimmung des Mittelwertes werden vorzugsweise in einem sehr kurzen Zeitraum ermittelt, worunter ein Zeitraum zu verstehen ist, der im Vergleich zu dem Zeitraum zwischen $t_1$ und $t_2$ oder dem Zeitraum zwischen

$t_x$ und $t_{x-1}$ kurz ist, vorzugsweise ein Zeitraum von wenigen Sekunden. Als Zeitpunkt $t_1$, $t_2$ und $t_x$ kann bei einer Mittelung aus mehreren Werten der Zeitpunkt festgesetzt werden, der dem Zeitpunkt der Messung des ersten zur Mittelung herangezogenen Messwerts oder des letzten zur Mittelung herangezogenen Messwerts entspricht, oder ein Zeitpunkt dazwischen.

Die Änderung der Lage des Teils wird ergänzend zu Korrekturwerten berücksichtigt, die durch eine CAA ermittelt werden. Ein aus dem obigen Verfahren erhaltener Wert der Änderung der Lage des Teils, insbesondere einer Führung, zu einem gewählten Zeitpunkt bzw. am Ende einer gewählten Zeitdauer wird zu einem Führungsfehlerwert addiert, der durch ein herkömmliches CAA-Verfahren ermittelt wurde, sodass ein Gesamtwert eines Führungsfehlers zu einem bestimmten Zeitpunkt erhalten wird. Mit dem erfindungsgemäßen Verfahren wird ein dynamischer Führungsfehler ermittelt, der laut Definition zeitlich veränderlich ist, im Gegensatz zu Führungsfehlern, die mit CAA ermittelt und als langzeitstabil angenommen werden. Durch den dynamischen Führungsfehler ist auch der Gesamtwert des Führungsfehlers zeitlich veränderlich. Wie beschrieben, kann die Änderung der Lage eines Teils wiederholt bzw. zyklisch durchgeführt werden, und die ermittelten Lageänderungen zu verschiedenen Zeitpunkten können herangezogen werden, um durch CAA ermittelte Führungsfehler wiederholt bzw. zyklisch zu ergänzen oder zu korrigieren. So wird in ausgewählten zeitlichen Abständen ein Gesamtwert eines Führungsfehlers erhalten, der zeitlich veränderlich ist.

Durch die vorliegende Erfindung kann eine Verbesserung der Last-, Temperatur- und Langzeit-Genauigkeitsspezifikation bei Koordinatenmessgeräten erreicht werden. Durch die Bestimmbarkeit des dynamischen Führungsfehlers können die Anforderungen an Fundamente und Klimatisierung erniedrigt werden, bei gleichbleibender Genauigkeit des Messergebnisses.

Die Erfindung wird nachfolgend anhand von Ausführungsbeispielen erläutert. Es zeigen:

Fig. 1      ein Gantry-Koordinatenmessgerät in einer Seitenansicht,

Fig. 2      ein Gantry-KMG, das eine mit Flüssigkeit gefüllte Vorrichtung aus kommunizierenden Röhren aufweist,

Fig. 3      eine schematische Zeichnung eines Gantry-KMG, bei dem eine Torsionsänderung aufgetreten ist,

Fig. 4      eine seitliche Ansicht eines Gantry-KMG mit einer Vorrichtung aus kommunizierenden Röhren, bei dem eine Torsionsänderung stattgefunden hat,

Fig. 5a-c    eine nicht geneigte und eine geneigte, mit Flüssigkeit gefüllte Vorrichtung aus kommunizierenden Röhren, und

Fig. 6      eine Skizze eines Portal-KMG mit einer Vorrichtung aus kommunizierenden Röhren.

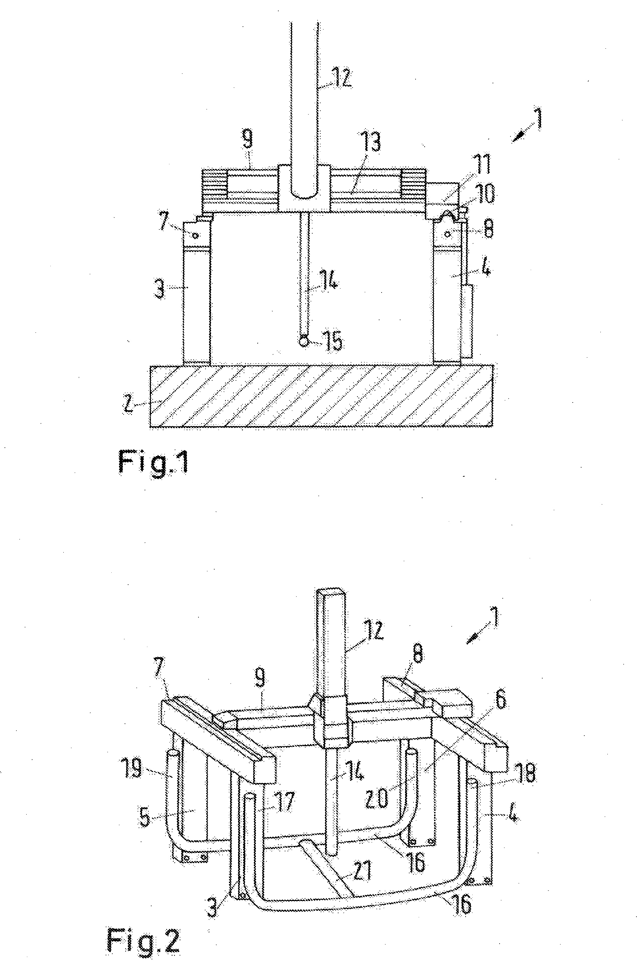

Die Fig. 1 zeigt ein Koordinatenmessgerät 1 nach dem Stand der Technik. Das KMG ist in der so genannten Gantry-Bauweise ausgeführt. Auf der Basis 2 sind Stützen 3, 4 befestigt. Hinter den Stützen 3, 4 befinden sich weitere Stützen 5, 6, die in dieser Darstellung nicht zu sehen sind (s. dazu Fig. 2). Die Stützen 3 und 5 (5 befindet sich hinter 3) tragen die Führung 7 und die Stützen 4 und 6 (6 ist in dieser Ansicht hinter 4 angeordnet) tragen die Führung 8. Die Führungen 7 und 8 verlaufen zueinander parallel und beide Führungen erstrecken sich in dieser Darstellung senkrecht zur Ebene der Zeichnung. Quer zwischen den Führungen 7, 8 erstreckt sich eine aus den Führungen verschiebbare Brücke 9. In dieser Darstellung ist die Brücke 9 senkrecht zur Zeichnungsebene verschiebbar, also in die Blattebene hinein weg vom Betrachter oder aus der Blattebene hinaus in Richtung des Betrachters. Die Brücke 9 liegt auf der Oberseite der Führungen 7 und 8 auf, wobei auf der Führung 8 eine Schiene 10 angeordnet ist, auf der ein Wagen 11 als Teil der Brücke 9 mit einer komplementären Ausformung aufliegt. An der Brücke 9 ist eine Pinole 14 geführt. Die Pinole 14 ist in einer Schiene 13 entlang der Brücke verschiebbar geführt. Am unteren Ende der Pinole 14 ist ein Schaft (nicht gezeigt) eingeführt, an dessen Ende eine Tastkugel 15 angebracht ist. Das Bezugszeichen 12 bezeichnet eine Verkleidung der Pinole.

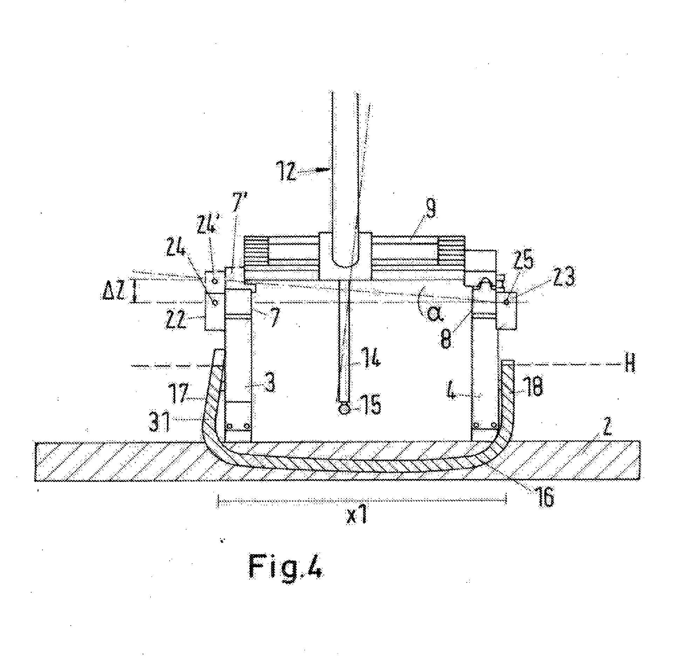

Die Fig. 2 zeigt ebenfalls ein Gantry-KMG 1, ohne Abbildung der Basis 2. Bei diesem Gantry-KMG 1 handelt es sich um eine erfindungsgemäße Ausführungsform, die eine mit Flüssigkeit gefüllte Vorrichtung 16 aus kommunizierenden Röhren 17, 18, 19, 20 aufweist. Die Röhren 17, 18, 19, 20 sind jeweils an einer der Stützen 3, 4, 5, 6 befestigt, wobei die Röhre 17 an der Stütze 3, die Röhre 18 an der Stütze 4, die Röhre 19 an der Stütze 5 und die Röhre 20 an der Stütze 6 befestigt ist. In der gezeigten Ausführungsform sind die Röhren 17 und 18 aus einem Schlauchstück gefertigt, wobei das Schlauchstück in eine U-Form gebracht ist und die senkrechten Schenkel des U jeweils eine der Röhren 17 und 18 bilden. Entsprechendes gilt für die Röhren 19 und 20. Beide U-förmig gebogenen Schlauchstücke sind im unteren Bereich des U durch ein Verbindungsstück 21 verbunden, so dass alle Röhren 17, 18, 19, 20 miteinander kommunizieren. In der dargestellten Ausführungsform sind die den Röhren zugeordneten Messeinrichtungen nicht dargestellt (siehe dazu Fig. 4).

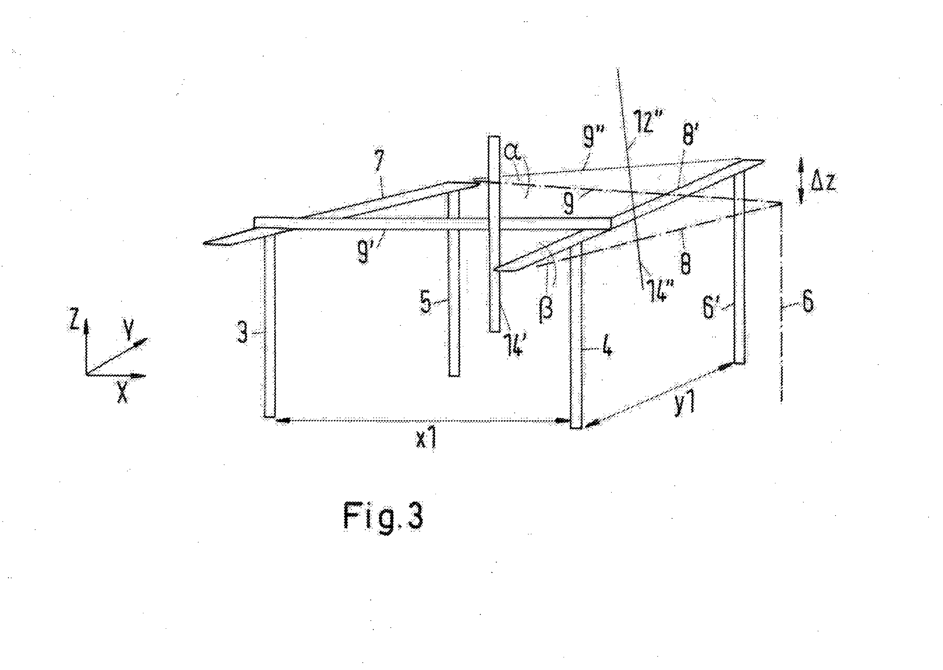

Die Fig. 3 zeigt ein Gantry-KMG in einer schematischen Darstellung und eine Änderung der räumlichen Lage der Führung 8. Die Bezugszeichen entsprechen denen aus der Fig. 1 und Fig. 2. In der Fig. 3 ist nicht die Vorrichtung 16 aus kommunizierenden Röhren gezeigt und es sind ebenfalls die Messeinrichtungen nicht dargestellt. Erläutert werden soll anhand dieser Fig. 3 ein Torsionsführungsfehler, der durch eine Torsion bzw. Verwindung der Führung 8 relativ zur Führung 7 auftritt. Neben die schematische Zeichnung ist ein kartesisches Koordinatensystem eingezeichnet, woraus erkennbar ist, dass sich die Brücke 9 in Richtung der X-Koordinate erstreckt und die Pinole 14 in Richtung der X-Koordinate entlang der Brücke 9 verfahrbar ist. Die Führungen 7 und 8 erstrecken sich in Richtung der Y-Koordinate. Die Pinole 14 ist in Richtung der Z-Koordinate nach oben oder nach unten verfahrbar. Der Abstand zwischen der Stütze 3 und der Stütze 4 wird als x1 bezeichnet. Ebenso sind die Stützen 5 und 6 mit x1 beabstandet. Die gestrichelten Linien zeigen das Gantry-KMG im Ausgangszustand zu einem Zeitpunkt $t_1$. Im Ausgangszustand nimmt die Brücke 9 die Lage ein, die mit der hinteren gestrichelten Linie angedeutet ist, wenn sie in den hinteren Bereich der Führungen 7 und 8 verschoben ist. Die Ausgangslage der Stütze 6 ist durch die senkrechte gestrichelte Linie gezeigt und die Ausgangslage der Führung 8 durch die in der Abbildung diagonal verlaufende gestrichelte Linie. Zu einem späteren Zeitpunkt $t_2$ hat eine Änderung der Lage der Führung 8 und der Stütze 6 stattgefunden, beispielsweise durch eine Verwindung der (in dieser Abbildung nicht dargestellten) Basis 2, auf der die Stützen 3, 4, 5, 6 befestigt sind. Die veränderte Lage der Stütze 6 ist durch eine durchgängig gezeichnete Stütze 6' gezeigt und eine Veränderung der räumlichen Lage der Führung 8 durch eine durchgehend gezeichnete Führung 8'. Die durchgehend gezeichnete Stütze 6' und die Führung 8' stellen die räumliche Lage zum Zeitpunkt $t_2$ dar. Alle geänderten Lagen von Teilen zum Zeitpunkt $t_2$ sind dadurch gekennzeichnet, dass den Bezugszeichen der betroffenen Teile ein oder zwei Hochstriche (' oder ") zugefügt sind.

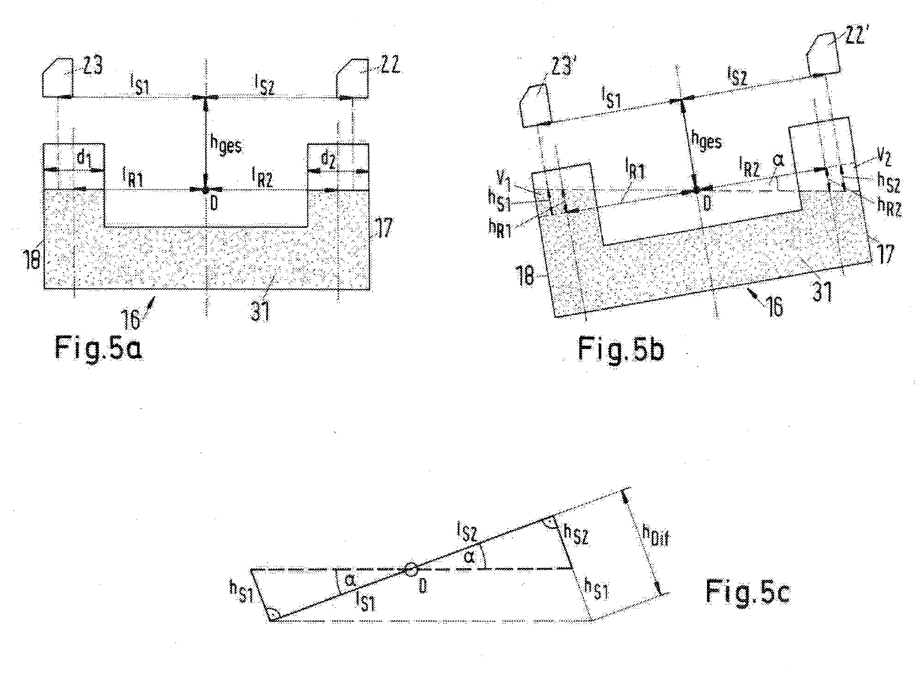

Durch die Veränderung der räumlichen Lage der Stütze 6 zu 6', wobei es sich in diesem Fall um eine relative Anhebung der Stütze 6 gegenüber den Stützen 3, 4, 5 handelt, wird die Führung 8 gegenüber der Führung 7 verdreht. Im Ausgangszustand waren die Führungen 7 und 8 parallel zueinander und lagen in einer Ebene. Im verdrehten Zustand ist die Führung 8' gegenüber der Führung 7 um den Winkel β verdreht. Dieses Phänomen wird als Torsionsführungsfehler bezeichnet. Die Torsion der Führungen 7 und 8' zueinander bewirkt, dass beim Verfahren der Brücke 9 (deren veränderte Lage durch 9' bei Positionierung der Brücke im vorderen Bereich der Führungen und 9" bei Positionierung der Brücke im hinteren Bereich der Führungen gezeigt ist) in Richtung Y das in der Abbildung gezeigte rechte Ende der Brücke angehoben wird, oder anders ausgedrückt die Brücke 9 im Gegenuhrzeigersinn um eine in Y-Richtung weisende verdreht wird. Ebenso wird die an der Brücke angebrachte Pinole 14 beim Verfahren der Brücke in Y-Richtung im Gegenuhrzeigersinn um eine in Y-Richtung weisende Achse verdreht. Die Verdrehung der Pinole 14 ist erkennbar, wenn die Brücke vom vorderen in den hinteren Bereich der Führungen 7, 8' verfahren wird und man die Position 14' der Pinole mit der Position 14" vergleicht. Die Position 14' wird eingenommen, wenn die Brücke 9' sich im vorderen Bereich der Führungen 7 und 8' befindet. Die Position 14", die gegenüber der Position 14' verdreht ist, wird eingenommen, wenn die Brücke 9' in Y-Richtung in den hinteren Bereich der Führungen 7 und 8' verfahren wird und die Position 9" einnimmt. Die gezeigten Positionsänderungen der Brücke und der Pinole werden auch als yRy-Torsionsänderung bezeichnet, da sowohl die Brücke 9 als auch die Pinole 14 beim Verfahren in Y-Richtung um eine in Y-Richtung weisende Achse gedreht werden. Die Änderung der räumlichen Lage der Führung 8 ist derart, dass die Führung 8 am hinteren Ende relativ zu den anderen Führungen um die Strecke Δz angehoben wurde. Diese Anhebung um Δz ist ermittelbar, indem beispielsweise die Änderungen der Flüssigkeitspegel in kommunizierenden Röhren ermittelt werden, die an den Stützen 5 und 6 angebracht sind und daraus der Winkel α ermittelt wird, wie anhand Fig. 5a-c erläutert. Die Berechnung von Δz kann erfolgen gemäß $x1 * \tan\alpha = \Delta z$. Die Torsionsänderung yRy entspricht dem Winkel α bezogen auf den Verfahrweg der Brücke entlang der Y-Achse. Der Winkel β kann errechnet werden nach der Formel $\tan\beta = \Delta z / y1$. y1 entspricht hierbei dem Abstand der Stützen 4 und 6. Der Winkel β kann ermittelt werden, indem die Änderungen der Flüssigkeitspegel in kommunizierenden Röhren ermittelt wird, die an den Stützen 4 und 6 angebracht sind.

In der Praxis kann ebenso eine relative Absenkung der Stütze 6 gegenüber den Stützen 3, 4, 5 erfolgen, die gegenüber der zuvor erläuterten Anhebung noch häufiger auftritt. Eine Absenkung hat bei Betrachtung der Ausgangszustand der Fig. 3 ebenfalls eine Torsion der Führungen 7 und 8 zueinander zu Folge. Die Torsion ist bei einer Absenkung der Stütze 6 derart dass beim Verfahren der Brücke 9 in Richtung Y das in der Abbildung gezeigte rechte Ende der Brücke abgesenkt wird, oder anders ausgedrückt die Brücke 9 im Uhrzeigersinn um eine in Y-Richtung weisende Drehachse verdreht wird. Ebenso wird die an der Brücke angebrachte Pinole 14 beim Verfahren der Brücke in Y-Richtung im Uhrzeigersinn um eine in Y-Richtung weisende Achse verdreht. Die Änderung der räumlichen Lage der Führung 8 ist bei einer Absenkung der Stütze 6 derart, dass die Führung 8 am hinteren Ende relativ zu den anderen Führungen um die Strecke Δz' abgesenkt wird. Diese Absenkung um Δz' ist ermittelbar, indem beispielsweise die Änderungen der Flüssigkeitspegel in kommunizierenden Röhren ermittelt werden, die an den Stützen 5 und 6 angebracht sind und daraus ein Winkel α' ermittelt wird, was in analoger Weise geschieht, wie die Ermittlung des Winkels α bei einer Anhebung der Stütze 6 gemäß Fig. 3. Die Berechnung von Δz' kann erfolgen gemäß $x1 * \tan\alpha = \Delta z'$.

In der Fig. 4 ist ein Gantry-KMG in gleicher Perspektive wie in der Fig. 1 dargestellt. Die erfindungsgemäße Ausführungsform der Fig. 4 weist eine Vorrichtung 16 aus kommunizierenden Röhren 17, 18 auf. Nicht sichtbar sind in Fig. 4 hintere Stützen 5, 6 mit Röhren 19, 20 (vergleiche Fig. 2). Weiterhin sind Messeinrichtungen 22, 23 vorhanden, beispielsweise optische Sensoren, welche im Bereich der Führungen 7, 8 und oberhalb der Röhren 17 bzw. 18 angebracht sind, wobei die Messeinrichtung 22 der Röhre 17 und die Messeinrichtung 23 der Röhre 18 zugeordnet ist. Über weiteren, hier nicht dargestellten Röhren 19, 20 (vergleiche Fig. 2) sind jeweils weitere Messeinrichtungen angebracht. In der Fig. 4 ist analog zur Fig. 3 dargestellt, dass eine Stütze, in diesem Fall die Stütze 3, durch eine Verwindung der Basis 2 relativ zu anderen Stützen, insbesondere relativ zur Stütze 4 und relativ zu den Flüssigkeitsoberflächen in den Röhren 17, 18, markiert durch die Linie H, nach oben bewegt wird. In dieser Darstellung ist der Ausgangszustand mit durchgezogenen Linien gezeichnet und die yRy-Torsionsänderung durch abwechselnd gepunktete und gestrichelte Linien angedeutet. Die Y-Achse steht bei dieser Abbildung senkrecht zur Zeichnungsebene und die yRy-Torsion geschieht vom Blickwinkel des Betrachters aus im Uhrzeigersinn. Wenn beispielsweise eine Verwindung der Basis 2 eine relative Anhebung der Stütze 3 bewirkt, wird die Stütze 3 relativ zu den Flüssigkeitsoberflächen in den Röhren 17, 18, markiert durch die Linie H nach oben bewegt und mit ihr die Führung 7, der Fixpunkt 24 und die Messeinrichtung 22. Die geänderten Positionen sind mit 7', 22' und 24' bezeichnet. Auch die an der Stütze 3 befestigte Röhre 17 wird mitbewegt. Die Führung 7 wird um die Strecke $\Delta z$ relativ zu der Führung 8 nach oben bewegt. Wenn sich die Brücke 9 auf gleicher Höhe befindet wie die Stützen 3 und 4, wobei mit gleicher Höhe der Verfahrweg in Y-Richtung gemeint ist, dann ist die Brücke an dieser Stelle um den Winkel $\alpha$ geneigt, wobei $\tan\alpha = \Delta z / x_1$, wobei $x_1$ in diesem Fall nicht den Abstand der Stützen 3 und 4 bezeichnet wie in der schematischen Zeichnung der Fig. 3, sondern den Abstand der Sensoren 22 und 23 bzw. den Abstand der Fixpunkte 24 und 25.

Die Fixpunkte 24 und 25 sind an bzw. im Sensor 22 bzw. 23 angeordnet. Der Fixpunkt 24 ist relativ zu der Führung 7 unbeweglich, d.h. fix, weil der Sensor 22 an der Führung 7 fixiert und damit auch relativ zur Führung 7 unbeweglich ist. Analoges gilt für den Fixpunkt 25, der relativ zur Führung 8 unbeweglich ist. Der Sensor 22 misst den Abstand zwischen dem Fixpunkt 24 und der Flüssigkeitsoberfläche in der Röhre 17, d.h. den Höhenunterschied zwischen der Flüssigkeitsoberfläche in der Röhre 17 und dem Fixpunkt 24. Der Sensor 23 misst den Abstand zwischen dem Fixpunkt 25 und der Flüssigkeitsoberfläche in der Röhre 18, d.h. den Höhenunterschied zwischen der Flüssigkeitsoberfläche in der Röhre 18 und dem Fixpunkt 25.

In der Fig. 5 ist die Ermittlung des Winkels $\alpha$ erläutert. Gezeigt sind in Fig. 5a und 5b nur die Vorrichtung aus kommunizierenden Röhren 17, 18 und die über den Röhren angebrachten Sensoren 22, 23. Die Fig. 5a zeigt die Vorrichtung im Ausgangszustand und die Fig. 5b die Vorrichtung nach der Verkippung um die Drehachse D. Im Vergleich zur Fig. 4 ist die Blickrichtung in den Fig. 5a und 5b genau umgekehrt, so dass sich in der Fig. 5a und Fig. 5b die Röhre 17 rechts und die Röhre 18 links befindet, während es in der Fig. 4 genau umgekehrt ist. Entsprechend wird in der Fig. 5b die Vorrichtung 16 aus Blickrichtung des Betrachters gegen den Uhrzeigersinn verkippt, während sie in der Fig. 4 im Uhrzeigersinn verkippt wird. Die Abkürzungen in den Fig. 5a und 5b haben die nachfolgenden Bedeutungen:

| Abkürzung | Beschreibung |
|---|---|
| $d_1$ | Durchmesser linke Röhre (Röhre 18) |
| $d_2$ | Durchmesser rechte Röhre (Röhre 17) |
| $l_{Sges}$ | Abstand Sensor 22 zu Sensor 23 (bzw. von Fixpunkt 24 zu Fixpunkt 25, s. Fig. 4) |
| $l_{S1}$ | Abstand Sensor 23 zur Drehachse D |
| $l_{S2}$ | Abstand Sensor 22 zur Drehachse D |
| $l_{Rges}$ | Abstand Röhre-Mitte 18 zu Röhre-Mitte 17 |
| $l_{R1}$ | Abstand Röhre-Mitte 18 zur Drehachse D |
| $l_{R2}$ | Abstand Röhre-Mitte 17 zur Drehachse D |
| hges | Abstand der Sensoren zur Wasseroberfläche im Ausgangszustand |
| $\alpha$ | Verkippwinkel der Vorrichtung |
| $h_{R1}$ | Füllstandsänderung Röhre-Mitte 18 |
| $h_{R2}$ | Füllstandsänderung Röhre-Mitte 17 |
| $V_1$ | linkes Volumen |
| $V_2$ | rechtes Volumen |
| $h_{S1}$ | Durch Sensor 23 ermittelte Füllstandsänderung in Röhre 18 (Änderung des Höhenunterschieds zwischen der Flüssigkeitsoberfläche in der Röhre 18 und dem Fixpunkt 25, s. Fig. 4) |
| $h_{S2}$ | Durch Sensor 22 ermittelte Füllstandsänderung in Röhre 17 (Änderung des Höhenunterschieds zwischen der Flüssigkeitsoberfläche in der Röhre 17 und dem Fixpunkt 24, s. Fig. 4) |

Wenn eine Stütze relativ zum Referenzsystem gleich hoher Flüssigkeitsoberflächen und relativ zu einer anderen Stütze angehoben oder abgesenkt wird (wie in Fig. 3 und 4 erläutert), wird dabei die Vorrichtung 16, deren Röhren mit den Stützen verbunden sind, gekippt. Beim Kippen der Vorrichtung 16 fließt Wasser von der einen Röhre in die andere, bis sich wieder ein Gleichgewichtszustand aufgrund der Gravitationskraft einstellt. Hierbei findet ein Wasservolumenausgleich zwischen der linken Röhre 18 und der rechten Röhre 17 statt. Wie theoretisch nachgewiesen werden kann, ist die Position der Drehachse D der Vorrichtung 16 vom gegebenen Volumenverhältnis der Röhre 17 und 18 abhängig und liegt auf der Höhe des Wasserspiegels. Bei gleichem Röhrendurchmesser $d_1=d_2$ ist $l_{R1}=l_{R2}$ und die Drehachse D liegt genau in der Mitte zwischen den Röhren 17 und 18. Durch die Verkippung der Vorrichtung 16, wie in Fig. 5b gezeigt, füllt sich das Volumen $V_1$ in Röhre 18 und das Volumen $V_2$ im Röhre 17 leert sich. $h_{S1}$ ist die mit dem Sensor 23 ermittelte Füllstandsänderung in Röhre 18 im Vergleich zum Ausgangszustand der Fig. 5a. Entsprechend ist $h_{S2}$ die durch den Sensor 22 ermittelte Füllstandsänderung in Röhre 17. $h_{S1}$ wird ein positives Vorzeichen zugeordnet, weil sich das Volumen $V_1$ füllt und entsprechend wird $h_{S2}$ ein negatives Vorzeichen zugeordnet, weil sich das Volumen $V_2$ leert. Aus $h_{S1}$ und $h_{S2}$ wird das so genannte Differenzsignal $h_{SDif}$ errechnet, wobei gilt: $h_{Dif}=h_{S1}-h_{S2}$. Aus dem Differenzsignal und dem vorgegebenen Abstand der Sensoren $l_{Sges}$ kann der Verkippwinkel $\alpha$ der Vorrichtung 16 nach folgender Formel berechnet werden:

$$h_{Dif} = l_{Sges} * \tan\alpha$$

Der Verkippwinkel $\alpha$ ist auch der Verkippwinkel einer Führung, die auf den Stützen befestigt ist, an welchen die Röhren 17 und 18 befestigt sind. Eine Übersicht über die relevanten Strecken nach einer Verkippung entgegen dem Uhrzeigersinn, wie in Fig. 5b gezeigt, ist in der Fig. 5c dargestellt.

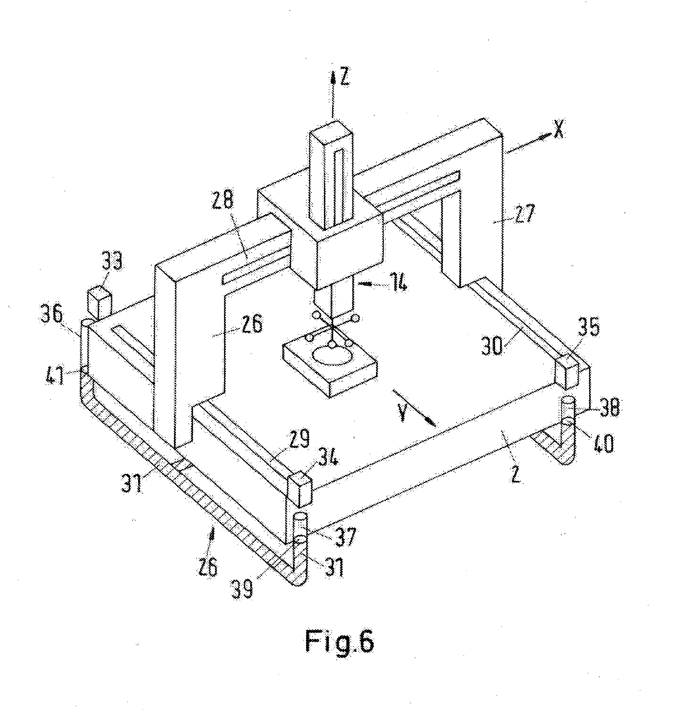

In der Fig. 6 ist ein KMG in Portalbauweise gezeigt. Das Portal ist aus zwei von unten nach oben verlaufenden Stützen 26, 27 und einem zwischen den Stützen verlaufenden Querträger 28 gebildet. Am Querträger 28 ist die Pinole 14 in X-Richtung verschiebbar. Das Portal ist in zwei parallel zueinander verlaufenden Führungen 29, 30 geführt und in den Führungen 29, 30 in Y-Richtung verschiebbar. Unter der Basis 2 ist eine Vorrichtung aus kommunizierenden Röhren angeordnet. Die Führungen 29, 30 sind auf der Basis 2 angeordnet, in diesem speziellen Fall in die Führung eingelassen. Die Röhren 36, 37, 38 der Vorrichtung 16 sind im Bereich der Enden der Führungen 29, 30 angeordnet. Sie sind an der Basis 2 fixiert. Die Röhre am hinteren Ende der Führung 30 ist in der Abbildung nicht sichtbar. Oberhalb jeder Röhre 36, 37, 38 und der von dem Querträger 28 verdeckten Röhre am hinteren Ende der Führung 30 sind Messeinrichtungen 33, 34, 35 angeordnet, wobei auch die Messeinrichtung am hinteren Ende der Führung 30 vom Querträger 28 verdeckt ist. Die Messeinrichtungen 33, 34, 35 und die weitere verdeckte Messeinrichtung sind in dieser Ausführungsform optische Sensoren, die ausgestaltet sind, den Abstand der Flüssigkeitsoberfläche 39, 40, 41 zum Ort des der jeweiligen Röhre zugeordneten Sensors 33, 34, 35 zu messen. Die Flüssigkeitsoberflächen 39, 40, 41 und eine nicht gezeigte vierte Flüssigkeitsoberfläche in einer vierten Röhre, die von dem Querträger 28 verdeckt ist, liegen in einer gemeinsamen horizontalen Ebene und verbleiben auch in einer gemeinsamen horizontalen Ebene, wenn die Basis 2 sich verwindet oder anderweitig verformt. Die Feststellung einer Änderung $\Delta z$ und eines Torsionswinkels $\alpha$ kann bei dem in Fig. 6 gezeigten Portal KMG nach dem gleichen Prinzip bestimmt werden wie bei dem in Fig. 4 gezeigten Gantry-KMG (s. dazu Fig. 5a-5c).

**Patentansprüche**

1. Koordinatenmessgerät (1), aufweisend

   - eine Basis (2)
   - mindestens eine relativ zur Basis (2) fixierte Führung (7,8; 29, 30), durch die eine Bewegung eines beweglichen Teils geführt ist,

   **gekennzeichnet durch**

   - eine mit Flüssigkeit gefüllte Vorrichtung (16) aus kommunizierenden Röhren (17, 18, 19, 20; 36, 37, 38), in denen sich bezogen auf das Gravitationsfeld der Erde gleich hohe Flüssigkeitsoberflächen einstellen,
   - den Röhren zugeordnete Messeinrichtungen (22, 23; 33, 34, 35), welche jeweils den Flüssigkeitspegel in der Röhre und/oder den Höhenunterschied zwischen der Flüssigkeitsoberfläche und einem Fixpunkt (24, 25), welcher relativ zu der Führung (7, 8) unbeweglich ist, bestimmen,

   wobei das Koordinatenmessgerät dazu eingerichtet ist,

EP 2 734 807 B1

- aus den bestimmten Flüssigkeitspegeln oder aus Änderungen der Höhenunterschiede Informationen über die Lage des Teils des Koordinatenmessgeräts in Bezug auf das Koordinatsystem der Erde zu ermitteln, und
- die aus den Flüssigkeitspegeln oder aus Änderungen der Höhenunterschiede gewonnenen Informationen für den Betrieb des Koordinatenmessgeräts zu nutzen und Messsignale aus der Vermessung zumindest eines Werkstücks mit dem Koordinatenmessgerät unter Verwendung der gewonnenen Informationen auszuwerten und/oder zu korrigieren.

2. Koordinatenmessgerät nach Anspruch 1, aufweisend mindestens zwei parallel zueinander verlaufende Führungen (7, 8; 29, 30).

3. Koordinatenmessgerät nach einem der Ansprüche 1 oder 2, bei dem die Röhren (36, 37, 38) im Bereich der Enden der Führung(en) (29, 30, 31) angeordnet sind.

4. Koordinatenmessgerät nach einem der Ansprüche 1-3, bei dem jede Röhre (17, 18, 19, 20) bis an das Höhenniveau der Führung(en) (7, 8) reicht.

5. Koordinatenmessgerät nach einem der Ansprüche 1-4, bei dem die Röhren (17, 18, 19, 20; 36, 37, 38) jeweils an einer Stütze (3, 4, 5, 6), welche die Führung (7, 8) trägt, oder an der Basis (2) befestigt sind.

6. Koordinatenmessgerät nach einem der vorangehenden Ansprüche, bei dem oberhalb jeder Röhre (17, 18, 19, 20; 36, 37, 38) eine Messeinrichtung (22, 23; 33, 34, 35) angeordnet ist.

7. Koordinatenmessgerät nach einem der vorangehenden Ansprüche, das vier Röhren (17, 18, 19, 20) aufweist.

8. Koordinatenmessgerät nach einem der vorangehenden Ansprüche, bei dem die Messeinrichtungen (22, 23; 33, 34, 35) optische Sensoren aufweisen, die ausgestaltet sind, den Abstand der Flüssigkeitsoberfläche zu dem Ort des Sensors zu messen.

9. Koordinatenmessgerät (1) nach einem der vorangehenden Ansprüche, das dazu eingerichtet ist, die Änderung der Lage des Teils ergänzend zu Korrekturwerten, die durch eine Computer Aided Accuracy ermittelt sind, zu berücksichtigen.

10. Verfahren zur Bestimmung der Lage eines Teils eines Koordinatenmessgeräts, insbesondere einer Führung zum Führen der Bewegung eines beweglichen weiteren Teils des Koordinatenmessgeräts, bei dem folgende Schritte ausgeführt werden:

a) Es wird der Flüssigkeitspegel jeweils in einer von einer Mehrzahl miteinander kommunizierender Röhren in Bezug auf jeweils einen Referenzpunkt, der der Röhre zugeordnet ist, bestimmt,
b) aus den bestimmten Flüssigkeitspegeln werden Informationen über die Lage des Teils des Koordinatenmessgeräts in Bezug auf das Koordinatsystem der Erde gewonnen,
c) die aus den Flüssigkeitspegeln gewonnenen Informationen werden für den Betrieb des Koordinatenmessgeräts genutzt, wobei Messsignale aus der Vermessung zumindest eines Werkstücks mit dem Koordinatenmessgerät unter Verwendung der gewonnenen Informationen ausgewertet und/oder korrigiert werden.

11. Verfahren zur Bestimmung der Lage eines Teils eines Koordinatenmessgeräts, insbesondere einer Führung zum Führen der Bewegung eines beweglichen weiteren Teils des Koordinatenmessgeräts, und zur Korrektur dynamischer Führungsfehler des Koordinatenmessgeräts, wobei bei dem Verfahren

- eine mit Flüssigkeit gefüllte Vorrichtung aus kommunizierenden Röhren, in denen sich bezogen auf das Gravitationsfeld der Erde gleich hohe Flüssigkeitsoberflächen einstellen, und
- den Röhren zugeordnete und relativ zu dem Teil des Koordinatenmessgeräts unbewegliche Messeinrichtungen, welche jeweils den Flüssigkeitspegel in der Röhre und/oder den Höhenunterschied zwischen der Flüssigkeitsoberfläche und einem Fixpunkt, welcher relativ zu dem Teil des Koordinatenmessgeräts unbeweglich ist, bestimmen,

eingesetzt werden, und

a) zu einem Zeitpunkt $t_1$ an mehreren Röhren mit der zugeordneten Messeinrichtung jeweils der Flüssigkeitspegel in der Röhre und/oder der Höhenunterschied zwischen der Flüssigkeitsoberfläche und einem Fixpunkt, welcher relativ zu dem Teil unbeweglich ist, bestimmt wird,

b) zu einem späteren Zeitpunkt $t_2$ an mehreren Röhren mit der zugeordneten Messeinrichtung jeweils der Flüssigkeitspegel in der Röhre und/oder der Höhenunterschied zwischen der Flüssigkeitsoberfläche und einem Fixpunkt, welcher relativ zu dem Teil unbeweglich ist, bestimmt wird, und

c) bei jeder Röhre der Flüssigkeitspegel in der Röhre zum Zeitpunkt $t_2$ mit dem der Flüssigkeitspegel in der Röhre zum Zeitpunkt $t_1$ verglichen wird und die Änderung des Flüssigkeitspegels ermittelt wird, und/oder bei jeder Röhre der Höhenunterschied zwischen der Flüssigkeitsoberfläche und dem Fixpunkt zum Zeitpunkt $t_2$ mit dem Höhenunterschied zwischen der Flüssigkeitsoberfläche und dem Fixpunkt zum Zeitpunkt $t_1$ verglichen wird und die Änderung des Höhenunterschieds ermittelt wird,

d) aus den Änderungen der Flüssigkeitspegel und/oder aus den Änderungen der Höhenunterschiede an mehreren Röhren die Änderung der Lage des Teils des Koordinatenmessgeräts ermittelt wird und ein Wert der Änderung der Lage des Teils erhalten wird,

e) die Änderung der Lage des Teils ergänzend zu Korrekturwerten berücksichtigt wird, die durch eine Computer Aided Accuracy ermittelt werden, wobei der Wert der Änderung der Lage des Teils zu einem Führungsfehlerwert addiert wird, der durch die Computer Aided Accuracy ermittelt wird, sodass ein Gesamtwert des Führungsfehlers erhalten wird.

12. Verfahren nach Anspruch 11, bei dem die Schrittfolge b) -d) einmal zu einem noch späteren Zeitpunkt als $t_2$ wiederholt wird, oder mehrmals zu verschiedenen, aufeinander folgenden, noch späteren Zeitpunkten als $t_2$ wiederholt wird.

13. Verfahren nach Anspruch 10, wobei die Informationen dazu verwendet werden, einen geometrischen Bezug zwischen verschiedenen Messsignalen der Vermessung eines Werkstücks herzustellen, welche bei verschiedenen Positionen und/oder Ausrichtungen eines beweglichen Teils des Koordinatenmessgeräts gewonnen werden.

14. Verfahren nach Anspruch 10 oder 13, wobei die Flüssigkeitspegel dazu genutzt werden, Abweichungen zwischen der tatsächlich ausgeführten Bewegung eines beweglichen weiteren Teils des Koordinatenmessgeräts von einer erwarteten oder idealen Bewegung festzustellen und/oder zu korrigieren.

15. Verfahren nach Anspruch 10, 13 oder 14, wobei die Lage des Teils des Koordinatenmessgeräts in Bezug auf das Koordinatensystem der Erde bezüglich eines rotatorischen Freiheitsgrades der Bewegung oder bezüglich mehrerer rotatorischer Freiheitsgrade der Bewegung ausgewertet wird.

**Claims**

1. Coordinate measuring machine (1), comprising:

   - a base (2),
   - at least one guide (7, 8; 29, 30) which is fixed relative to the base (2) and by means of which a movement of a movable part is guided, **characterized by**
   - a device (16) which is filled with liquid and made of communicating pipes (17, 18, 19, 20; 36, 37, 38), in which liquid surfaces set in at an equal height in relation to the gravitational field of the Earth,
   - measurement apparatuses (22, 23; 33, 34, 35), which are assigned to the pipes and which respectively determine the liquid level in the pipe and/or the height difference between the liquid surface and a fixed point (24, 25), which is stationary relative to the guide (7, 8),

   wherein the coordinate measuring machine is configured to

   - establish information about the location of the part of the coordinate measuring machine in relation to the coordinate system of the Earth from the determined liquid levels or from changes in the height differences and
   - use the information obtained from the liquid levels or changes in the height differences for operating the coordinate measuring machine and evaluate and/or correct measurement signals from measuring at least one workpiece with the coordinate measuring machine using the obtained information.

2. Coordinate measuring machine according to Claim 1, comprising at least two guides (7, 8; 29, 30) extending parallel to one another.

3. Coordinate measuring machine according to either of Claims 1 and 2, wherein the pipes (36, 37, 38) are arranged in the region of the ends of the guide (s) (29, 30, 31).

4. Coordinate measuring machine according to one of Claims 1 to 3, wherein each pipe (17, 18, 19, 20) reaches the level of the guide(s) (7, 8).

5. Coordinate measuring machine according to one of Claims 1 to 4, wherein the pipes (17, 18, 19, 20; 36, 37, 38) are respectively fastened to a support (3, 4, 5, 6), which carries the guide (7, 8), or to the base (2).

6. Coordinate measuring machine according to one of the preceding claims, wherein a measurement apparatus (22, 23; 33, 34, 35) is arranged above each pipe (17, 18, 19, 20; 36, 37, 38).

7. Coordinate measuring machine according to one of the preceding claims, which has four pipes (17, 18, 19, 20).

8. Coordinate measuring machine according to one of the preceding claims, wherein the measurement apparatuses (22, 23; 33, 34, 35) have optical sensors which are configured to measure the distance of the liquid surface from the location of the sensor.

9. Coordinate measuring machine (1) according to one of the preceding claims, which is configured to take into account the change in the location of the part in addition to correction values, which are established by a computer-aided accuracy.

10. Method for determining the location of a part of a coordinate measuring machine, in particular of a guide for guiding the movement of a movable further part of the coordinate measuring machine, in which the following steps are carried out:

   a) the liquid level is determined in each case in one of a plurality of pipes, which communicate with one another, in relation to respectively one reference point assigned to the pipe,
   b) information about the location of the part of the coordinate measuring machine in relation to the coordinate system of the Earth is obtained from the determined liquid levels,
   c) the information obtained from the liquid levels is used for operating the coordinate measuring machine, wherein measurement signals from measuring at least one workpiece with the coordinate measuring machine are evaluated and/or corrected using the information obtained.

11. Method for determining the location of a part of a coordinate measuring machine, in particular of a guide for guiding the movement of a movable further part of the coordinate measuring machine, and for correcting dynamic guide errors of the coordinate measuring machine, wherein

   - a device which is filled with liquid and made of communicating pipes, in which liquid surfaces set in at an equal height in relation to the gravitational field of the Earth, and
   - measurement apparatuses which are assigned to the pipes and which are stationary relative to the part of the coordinate measuring machine and which respectively determine the liquid level in the pipe and/or the height difference between the liquid surface and a fixed point, which is stationary relative to the part of the coordinate measuring machine,

   are used in the method and

   a) the liquid level in the pipe and/or the height difference between the liquid surface and a fixed point, which is stationary relative to the part, is determined in each case at a time $t_1$ at a plurality of pipes using the associated measurement apparatus,
   b) the liquid level in the pipe and/or the height difference between the liquid surface and a fixed point, which is stationary relative to the part, is determined in each case at a later time $t_2$ at a plurality of pipes using the associated measurement apparatus, and
   c) the liquid level in the pipe at the time $t_2$ is compared in each pipe to the liquid level in the pipe at the time $t_1$ and the change in the liquid level is established, and/or
   the height difference between the liquid surface and the fixed point at the time $t_2$ is compared in each pipe to height difference between the liquid surface and the fixed point at the time $t_1$ and the change in the height difference is established,

d) the change in the position of the part of the coordinate measuring machine is established from the changes in the liquid levels and/or from the changes in the height differences at a plurality of pipes and a value for the change in the position of the part is obtained,

e) the change in the position of the part is taken into account in addition to correction values, which are established by a computer-aided accuracy, wherein the value for the change in the position of the part is added to a guide error value, which is established by the computer-aided accuracy, such that an overall value of the guide error is obtained.

12. Method according to Claim 11, in which the sequence of steps b)-d) is repeated once at an even later time than $t_2$ or repeated a number of times at various, successive, even later times than $t_2$.

13. Method according to Claim 10, wherein the information is used to establish a geometric relationship between various measurement signals from the measurement of a workpiece, which are obtained at different positions and/or orientations of a movable part of the coordinate measuring machine.

14. Method according to Claim 10 or 13, wherein the liquid levels are used to determine and/or correct deviations from an expected or ideal movement of the actually performed movement of a movable further part of the coordinate measuring machine.

15. Method according to Claim 10, 13 or 14, wherein the location of the part of the coordinate measuring machine in relation to the coordinate system of the Earth is evaluated in respect of a rotational degree of freedom of the movement or in respect of a plurality of rotational degrees of freedom of the movement.

**Revendications**

1. Appareil (1) de mesure de coordonnées présentant :

   une base (2),
   au moins un guide (7, 8; 29, 30) immobile par rapport à la base (2) et qui guide le déplacement d'une partie mobile,

   **caractérisé par**

   un ensemble (16) rempli de liquide et constitué de tubes (17, 18, 19, 20; 36, 37, 38) communicants dans lesquels des surfaces de liquide de même hauteur s'établissent par rapport au champ de gravitation de la terre,
   des dispositifs de mesure (22, 23; 33, 34, 35) associés aux tubes et définissant chacun le niveau de liquide dans les tubes et/ou la différence de hauteur entre la surfaces du liquide et un point fixe (24, 25) immobile par rapport au guide (7, 8),
   l'appareil de mesure de coordonnées étant conçu pour :

      déterminer des informations concernant la position de la partie de l'appareil de mesure de coordonnées par rapport au système de coordonnées de la terre à partir des niveaux de liquide définis ou de modifications des différences de hauteur,
      utiliser les informations obtenues à partir des niveaux de liquide ou de modifications des différences de hauteur pour conduire l'appareil de mesure de coordonnées et
      évaluer et/ou corriger les signaux de mesure à partir de la meure des dimensions d'au moins une pièce avec l'appareil de mesure de coordonnées en recourant aux informations obtenues.

2. Appareil de mesure de coordonnées selon la revendication 1, présentant au moins deux guides (7, 8; 29, 30) s'étant parallèlement l'un à l'autre.

3. Appareil de mesure de coordonnées selon l'une des revendications 1 ou 2, dans lequel les tubes (36, 37, 38) sont disposés au niveau des extrémités du ou des guides (29, 30, 31).

4. Appareil de mesure de coordonnées selon l'une des revendications 1 à 3, dans lequel chaque tube (17, 18, 19, 20) s'étend jusqu'au niveau en hauteur du ou des guides (7, 8).

5. Appareil de mesure de coordonnées selon l'une des revendications 1 à 4, dans lequel les tubes (17, 18, 19, 20; 36, 37, 38) sont chacun fixé sur un support (3, 4, 5, 6) qui porte le guide (7, 8) ou sur la base (2).

6. Appareil de mesure de coordonnées selon l'une des revendications précédentes, dans lequel un dispositif de mesure (22, 23; 33, 34, 35) est disposé au-dessus de chaque tube (17, 18, 19, 20; 36, 37, 38).

7. Appareil de mesure de coordonnées selon l'une des revendications précédentes, présentant quatre tubes (17, 18, 19, 20) .

8. Appareil de mesure de coordonnées selon l'une des revendications précédentes, dans lequel les dispositifs de mesure (22, 23; 33, 34, 35) présentent des capteurs optiques configurés pour mesurer la distance entre la surface du liquide et l'emplacement du capteur.

9. Appareil (1) de mesure de coordonnées selon l'une des revendications précédentes, conçu pour tenir compte de la modification de la position de la partie en complément à des valeurs de correction déterminées par une précision assistée par ordinateur.

10. Procédé de détermination de la position d'une partie d'un appareil de mesure de coordonnées, en particulier d'un guide qui guide le déplacement d'une autre partie mobile de l'appareil de mesure de coordonnées, et dans lequel les étapes suivantes sont exécutées :

   a) le niveau de liquide dans un parmi plusieurs tubes communiquant les uns avec les autres par rapport à un point de référence associé aux tubes est déterminé,
   b) à partir des niveaux de liquide ainsi définis, des informations sont obtenues concernant la position de la partie de l'appareil de mesure de coordonnées par rapport au système de coordonnées de la terre,
   c) les informations obtenues à partir des niveaux de liquide sont utilisées pour la conduite de l'appareil de mesure de coordonnées, des signaux de mesure étant évalués et/ou corrigés à partir de la mesure des dimensions d'au moins une pièce à l'aide de l'appareil de mesure de coordonnées en recourant aux informations ainsi obtenues.

11. Procédé de détermination de la position d'une partie d'un appareil de mesure de coordonnées, en particulier d'un guide qui guide le déplacement d'une autre partie mobile de l'appareil de mesure de coordonnées et pour corriger des erreurs dynamiques de guidage de l'appareil de mesure de coordonnées, le procédé utilisant :

   un ensemble rempli de liquide et constitué de tubes communicants dans lesquels des surfaces de liquide de même hauteur s'établissent par rapport au champ de gravitation de la terre et
   des dispositifs de mesure associés aux tubes, immobiles par rapport à la partie de l'appareil de mesure de coordonnées et déterminant chacun le niveau de liquide dans les tubes et/ou la différence de hauteur entre la surface du liquide et un point fixe immobile par rapport à la partie de l'appareil de mesure de coordonnées, et

   a) à un instant $t_1$, le niveau de liquide dans les tubes et/ou la différence de hauteur entre la surface de liquide et un point fixe immobile par rapport à la partie est déterminé sur plusieurs tubes à l'aide du dispositif de mesure associé,
   b) en un instant $t_2$ ultérieur, le niveau de liquide dans les tubes et/ou la différence de hauteur entre la surface de liquide et un point fixe immobile par rapport à la partie est déterminé sur plusieurs tubes à l'aide du dispositif de mesure associé, et
   c) sur chaque tube, le niveau de liquide régnant dans le tube à l'instant $t_2$ est comparé au niveau de liquide régnant dans le tube à l'instant $t_1$ et la modification du niveau de liquide est déterminée et/ou
   sur chaque tube, la différence de hauteur entre la surface de liquide et le point fixe à l'instant $t_2$ est comparée à la différence de hauteur entre la surface de liquide et le point fixe à l'instant $t_1$ et la modification de la différence de hauteur est déterminée,
   d) à partir des modifications du niveau de liquide et/ou des modifications des différences de hauteur sur plusieurs tubes, la modification de la position de la partie de l'appareil de mesure de coordonnées est déterminée et une valeur de la modification de la position de la partie est obtenue,
   e) la modification de la position de l'appareil est prise en compte en complément à des valeurs de correction qui sont déterminées par une précision assistée par ordinateur, la valeur de la modification de la position de la partie étant ajoutée à une valeur d'erreur de guidage qui est déterminée par la précision assistée par ordinateur de manière à obtenir une valeur totale de l'erreur de guidage.

**12.** Procédé selon la revendication 11, dans lequel la succession d'étapes b) à d) est répétée une fois à un instant postérieur à $t_2$ ou est répétée plusieurs fois en différents instants successifs postérieurs à $t_2$.

**13.** Procédé selon la revendication 10, dans lequel les informations sont utilisées pour établir une relation géométrique entre différents signaux de mesure lors de la mesure d'une pièce, qui sont obtenues en différentes positions et/ou dans différentes orientations d'une partie mobile de l'appareil de mesure de coordonnées.

**14.** Procédé selon les revendications 10 ou 13, dans lequel les niveaux de liquide sont utilisés pour constater et/ou corriger des écarts entre le déplacement effectivement exécuté d'une autre partie mobile de l'appareil de mesure de coordonnées et un déplacement attendu ou idéal.

**15.** Procédé selon les revendications 10, 13 ou 14, dans lequel la position de la partie de l'appareil de mesure de coordonnées par rapport au système de coordonnées de la terre est évaluée en référence à un degré de liberté en rotation du déplacement ou à plusieurs degrés de liberté en rotation du déplacement.

Fig.1

Fig.2

Fig.3

Fig.4

Fig.5a

Fig.5b

Fig.5c

EP 2 734 807 B1

Fig.6

**EP 2 734 807 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2098759 A
- EP 1832416 A2
- DE 1448708 A2
- DE 19527019 A1
- EP 0632251 A1

**In der Beschreibung aufgeführte Nicht-Patentliteratur**

- **A. WECKENMANN ; B, GAWANDE.** Koordinaten-messtechnik. Hanser Verlag, 1999